# EUROPEAN PATENT SPECIFICATION

(11) **EP 4 023 410 B1**
(45) Date of publication and mention of the grant of the patent: **10.12.2025**
(21) Application number: 20875534.8
(22) Date of filing: 07.10.2020
(51) Int. Cl.: B29C 44/08, B29C 44/10, B29C 44/58, B32B 3/04, B32B 5/20, B32B 3/30

(54) **RESIN MOLDED ARTICLE**
HARZFORMARTIKEL
ARTICLE MOULÉ EN RÉSINE

(30) Priority: 10.10.2019 JP 2019187075
(43) Date of publication of application: 06.07.2022
(73) Proprietor: Resonac Corporation, Tokyo 105-7325 (JP)
(72) Inventor: YAMADA, Kouji, Tagawa-shi, Fukuoka 825-0005 (JP); NAKANO, Shingo, Tagawa-shi, Fukuoka 825-0005 (JP); MITSUISHI, Naoko, Tagawa-shi, Fukuoka 825-0005 (JP); MORISHITA, Seigo, Tagawa-shi, Fukuoka 825-0005 (JP); ANDO, Hiroyuki, Tagawa-shi, Fukuoka 825-0005 (JP); HIRAI, Yoji, Tagawa-shi, Fukuoka 825-0005 (JP)
(74) Representative: Hoffmann Eitle
(86) International application number: PCT/JP2020/037963
(87) International publication number: WO 2021/070853

(56) References cited:
- JP-A- 2009 067 007
- JP-A- 2017 100 448
- JP-A- 2017 100 449
- JP-A- 2017 100 449
- JP-A- 2019 064 203
- JP-A- 2019 064 203
- JP-A- 2019 064 204
- JP-A- 2019 064 204
- US-A1- 2002 136 861
- US-A1- 2005 252 127

## Description

### Technical Field

The present disclosure relates to a resin molded article.

### Background Art

Resin structures are lightweight as compared with metal, and therefore, are widely used as structural articles for vehicles, articles installed in vehicles, housings for electronic equipment, and the like. Among resin structures, resin molded articles in particular are lightweight, and therefore, in a case in which they are used as articles for vehicles such as automobiles or the like, an improvement in fuel economy can be expected.

The method disclosed in JP 2005 238726 A is known as an example of a method of injection foam molding a resin molded article that is used as a substrate for an interior part of an automobile or the like. In JP 2005 238726 A, molten resin is injected into a cavity of a mold for molding, the mold which includes a movable side mold and a fixed side mold, and thereafter, a foaming treatment is carried out in a state in which the movable side mold has been moved so as to open slightly (core-back) to obtain a resin molded article.

Furthermore, JP 2019 064204 A, JP 2019 064203 A, JP 2017 100449 A, US 2005/252127 A1, and US 2002/136861 A1 disclose further resin molded articles. Further, JP 2009 067007 A discloses a bend laminated sheet having a sandwich structure, wherein a core layer of a thermoplastic resin is interposed between metal sheets configuring those surfaces of the laminated sheet.

### SUMMARY OF INVENTION

### Technical Problem

In a case in which a molten resin is injected into the cavity, the molten resin is cooled and hardened at portions that contact the mold for molding, and a film-like skin layer is formed thereat. When, in this state, the movable side mold is core-back moved against the fixed side mold so that a volume of an interior of the cavity is enlarged, the molten resin covered by the skin layer is foamed to become a foamed layer, and a resin molded article is manufactured.

In a case in which a resin molded article has an end portion structure that extends in a direction substantially parallel to a direction of core-back, warpage may occur in the end portion structure extending in the substantially parallel direction. For example, assuming a case where a resin molded article includes a main body portion being planar and a protruding portion provided at an edge portion of the main body portion and protruding in a thickness direction of the main body (end portion structure) and where the thickness direction of the main body portion is substantially parallel to a direction of core-back, deformation such as warpage may occur in the protruding portion provided at the edge portion of the main body portion.

The present disclosure is made in view of the conventional circumstances described above with an object to provide a resin molded article that prevents or reduces deformation at its end portion.

### Solution to Problem

A resin molded article according to the present invention is defined in claim 1. Distinct embodiments thereof are defined in the dependent claims.

### Advantageous Effects of Invention

According to the present disclosure, it is possible to provide a resin molded article that prevents or reduces deformation at its end portion.

### BRIEF DESCRIPTION OF DRAWINGS

Fig. 1 is a back view of a resin molded article of the present embodiment.
Fig. 2 is a longitudinal cross-sectional view of the resin molded article illustrated in Fig. 1, which is taken along the line 2-2 in Fig. 1.
Fig. 3 is an enlarged view of a portion indicated by an arrow 3 in Fig. 2.
Fig. 4 is a schematic cross-sectional view of a mold.
Fig. 5 is an enlarged view of a portion indicated by an arrow 5 in Fig. 4.
Fig. 6 is an enlarged view of the portion indicated by the arrow 5 in Fig. 4 after core-back.
Fig. 7 is an enlarged view of the portion indicated by the arrow 5 in Fig. 4, illustrating a state immediately before the resin molded article is removed from the mold.
Fig. 8 is a partial cross-sectional view of a resin molded article of a comparative example.

### DESCRIPTION OF EMBODIMENTS

Embodiments in the present disclosure will now be described in detail. It is to be noted, however, that the present disclosure is not limited to the following embodiments. In the embodiments described below, components thereof (including element steps and the like) are not essential, unless otherwise specified. The same applies for numerical values and ranges thereof, and the invention is not limited thereto.

In the disclosures, the term "process" includes a process in which the purpose of the process can be achieved although the process is unable to be clearly distinguished from other processes in addition to a process independent from other processes.

In the disclosures, each numerical range specified using "(from) ... to ..." represents a range including the numerical values noted before and after "to" as the minimum value and the maximum value, respectively.

In the disclosures, with respect to numerical ranges stated hierarchically herein, the upper limit or the lower limit of a numerical range of a hierarchical level may be replaced with the upper limit or the lower limit of a numerical range of another hierarchical level. Further, in the present specification, with respect to a numerical range, the upper limit or the lower limit of the numerical range may be replaced with a relevant value shown in any of Examples.

In the present disclosures, each component may include plural kinds of substances corresponding to the component.

In the present disclosures, the term "layer" or "film" includes, when observing a region where a layer or film is present, a case in which the layer or the film is formed only on a part of the region in addition to a case in which the layer or the film is formed on the entirety of the region.

First, the resin molded article of the present embodiments will be described. Next, a manufacturing apparatus and a manufacturing method for manufacturing the resin molded article in the present embodiments will be described.

### <Resin molded article>

A resin molded article in the present embodiment includes: a main body portion having a design face and an opposite face thereto, and having a first foamed layer formed inside the main body portion; a protruding portion that is provided at an edge portion of the main body portion, and that protrudes toward a side opposite from the design face in a thickness direction of the main body portion; and a concavity that is recessed from a surface of the opposite face toward a thickness direction side of the main body portion at a root portion of the protruding portion at the opposite face. That is, the main body portion includes, at the root portion of the protruding portion at the opposite face, the concavity that is recessed from the surface of the opposite face toward the thickness direction side of the main body portion.

A concrete example of the resin molded article is described with reference to the drawings, but the present disclosure is not limited to this. Further, the sizes of the respective regions in the respective drawings are schematic, and the relative relationships between the sizes of the respective regions are not limited to these.

The resin molded article in the present embodiment can be used, for example, as an automobile component. However, usage of the resin molded article is not limited to an automobile component.

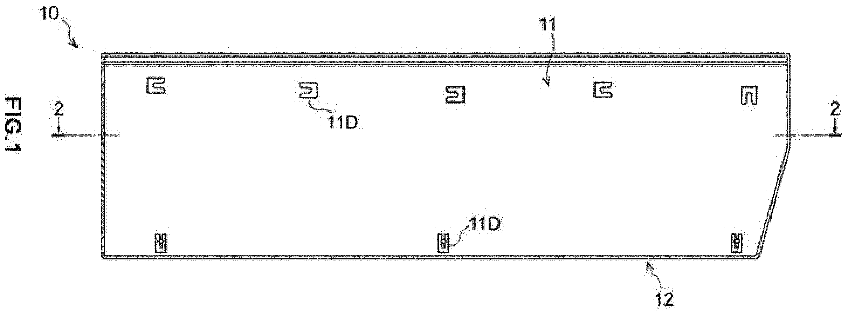

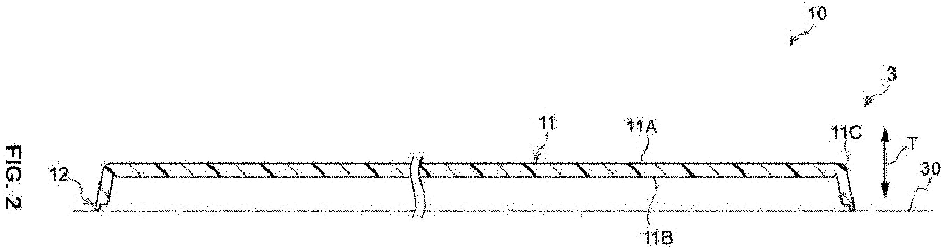

A resin molded article 10 illustrated in Fig. 1 is an automobile component and is to be attached to an automobile body 30 (see Fig. 2). Examples of the automobile component include an automobile interior part such as a center console, a door trim, a deck side trim, a back door trim, and an instrument panel, and an automobile exterior part such as an arch molding, a rocker molding, and a Sacco molding.

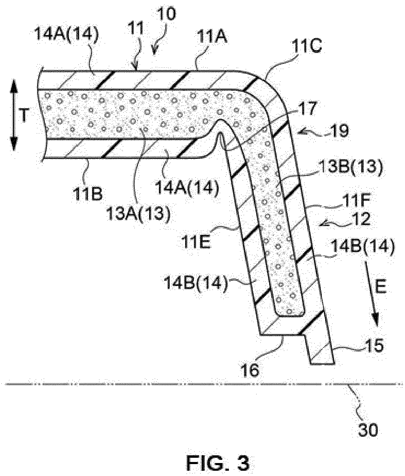

As illustrated in Fig. 2, the resin molded article 10 is made of a resin material and includes a main body portion 11 including a design face 11A and an opposite face 11B, and a protruding portion 12 provided at an edge portion 11C of the main body portion 11 (see Fig. 3) and protruding toward a side opposite from the design face 11A in a thickness direction of the main body portion 11 (a direction indicated by an arrow T in Fig. 2). In addition, at a root portion 19 of the protruding portion 12 at the opposite face 11B (see Fig. 3), a concavity 17 is provided from a surface of the opposite face 11B toward a thickness direction side of the main body portion 11.

The main body portion 11 is formed in a plate shape, and a plurality of automobile body attachment portions 11D (see Fig. 1) are formed on the opposite face 11B. These automobile body attachment portions 11D are portions used for attaching the main body portion 11 (resin molded article 10) to the automobile body 30 with an attachment member which is not illustrated.

As illustrated in Fig. 3, a first foamed layer 13A is formed inside the main body portion 11. Specifically, the main body portion 11 includes a pair of first skin layers 14A that configures a front face (design face 11A) and a back face (opposite face 11B), and includes the first foamed layer 13A formed between the pair of first skin layers 14A. The first foamed layer 13A is covered with the pair of first skin layers 14A.

As illustrated in Figs. 1 and 2, the protruding portion 12 is formed in a plate shape and provided at the entire edge portion 11C of the main body portion 11. That is, the protruding portion 12 in the present embodiment is provided along the edge portion 11C of the main body portion 11 around the main body portion 11. Note that the present disclosure is not limited to the configuration described above; the protruding portion 12 may be provided at intervals along the edge portion 11C of the main body portion 11 or may be provided at a part or parts of the edge portion 11C of the main body portion 11.

As illustrated in Fig. 2, in the present disclosure, the protruding portion 12 is present at an edge of the main body portion 11 when a cross section of the main body portion 11 is viewed.

As illustrated in Fig. 2, a protruding direction of the protruding portion 12 (direction indicated by an arrow E in Fig. 3) is inclined outward from the edge portion 11C of the main body portion 11 with respect to the thickness direction of the main body portion 11.

At an end of the protruding portion 12 in the protruding direction, a tip portion 15 is provided along a surface of the protruding portion 12 that continues from the design face 11A of the main body portion 11 (front face 11F). On an opposite side of the tip portion 15 to the front face 11F, a cutout 16 is presented. Therefore, a thickness of the tip portion 15 is made smaller than a thickness of the protruding portion 12.

By providing the tip portion 15 at the end of the protruding portion 12 in the protruding direction, the resin molded article 10 can be attached to the automobile body 30 so that a gap between the resin molded article 10 and the automobile body 30 is narrowed, which improves an appearance of an attached portion.

Inside the protruding portion 12, a second foamed layer 13B is formed. Specifically, the protruding portion 12 includes a pair of second skin layers 14B and the second foamed layer 13B that is formed between the pair of second skin layers 14B. As illustrated in Fig. 3, the first foamed layer 13A and the second foamed layer 13B may be continued to each other or need not be continued to each other.

Hereinafter, the first foamed layer 13A and the second foamed layer 13B will be collectively referred to as "foamed layer 13" as appropriate, and the first skin layers 14A and the second skin layers 14B will be collectively referred to as "skin layers 14" as appropriate. In the present embodiment, the skin layers 14 constitute the front surface (the design face 11A of the main body portion 11) and the back surface (the opposite face 11B of the main body portion 11) of the resin molded article 10, and the foamed layer 13 constitutes an interior of the resin molded article 10. The skin layers 14 refer to portions in the resin molded article 10 that have a foaming ratio lower than a foaming ratio of the foamed layer 13.

A resin material used for forming the resin molded article 10 in the present embodiment will be described below.

### <Mold>

A mold for forming the resin molded article in the present embodiment includes a fixed mold and a movable mold that is made movable against the fixed mold in an opening/closing direction and configured to form a cavity which is a space between the movable mold and the fixed mold.

The mold can be used for injection molding, suitably used for foam molding, and more suitably used for foam injection molding. However, the usage of the mold is not limited to these usages. Hereinafter, the description will be given of foam injection molding.

A concrete example of the mold is described hereinafter with reference to the drawings, but the present disclosure is not limited to this. Further, the sizes of the members in the respective drawings are schematic, and the relative relationships between the sizes of the members are not limited to these.

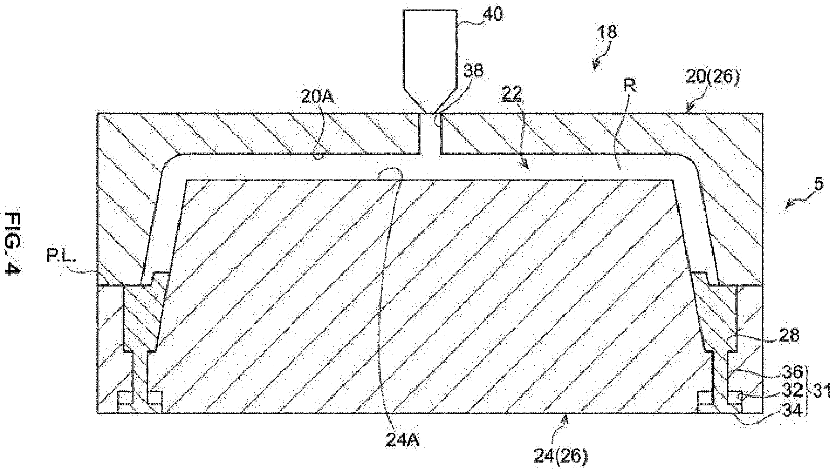

As illustrated in Fig. 4, a molding apparatus 18 includes a fixed mold 20 and a movable mold 24 that is made movable against the fixed mold 20 in an opening/closing direction and configured to form a cavity 22 which is a space between the movable mold 24 and the fixed mold 20. Note that the fixed mold 20 and the movable mold 24 may be hereinafter referred to as a "mold 26" collectively.

The cavity 22 has a shape corresponding to a shape of the resin molded article 10. In addition, there is a flash line (parting line, P.L.) between the fixed mold 20 and the movable mold 24 at a portion of in the cavity 22, the portion corresponding to an end of the tip portion 15 provided at the end of the protruding portion 12.

In the present embodiment, the front face (the design face 11A) on the main body portion 11 of the resin molded article 10, the front face 11F on the protruding portion 12, and a face on the tip portion 15 (the front face 11F) that continues from the design face 11A of the main body portion 11 are formed with a cavity face 20A on the fixed mold 20. In addition, the back face on the main body portion 11 of the resin molded article 10 (the opposite face 11B), a back face 11E on the protruding portion 12, and faces of the cutout 16 are formed with a cavity face 24A on the movable mold 24. Note that the cavity 22 is a space between the cavity face 20A and the cavity face 24A in a mold closed state of the fixed mold 20 and the movable mold 24.

The front face 11F of the protruding portion 12 may be a design face that continues from the design face 11A or may not be a design face. In addition, the back face 11E of the protruding portion 12 may not be a design face.

In addition, the movable mold 24 includes a slidable mold 28 which corresponds to the tip portion 15 and the cutout 16 of the resin molded article 10 in the cavity 22, and which is slidable in the same direction as the opening/closing direction of the movable mold 24. A portion of a face of the slidable mold 28 serves as a portion of the cavity face 24A and forms the tip portion 15 and the cutout 16.

On a side of the slidable mold 28 opposite to the part that forms a portion of the cavity face 24A and contributes the formation of the tip portion 15 and the cutout 16, a controller 31 used for controlling operation of the slidable mold 28 is provided. The controller 31 includes a cylinder portion 32 provided in the movable mold 24, a piston portion 34 disposed in the cylinder portion 32, and a rod 36 connecting the piston portion 34 and the slidable mold 28 to each other. In addition, the controller 31 includes load applicator, which is not illustrated, for applying a load in a direction in which the slidable mold 28 moves toward the fixed mold 20.

Further, the molding apparatus 18 has a gate 38 that passes-through the fixed mold 20 to the cavity 22, and an injector 40 that injects and fills resin material R, which is in a molten state, through the gate 38 into the cavity 22. The injector 40 has an unillustrated hopper (supplying portion) and an unillustrated cylinder. At this injector 40, a mixture that contains resin, a foaming agent, additives and the like is supplied to the cylinder from the hopper (supplying portion), and is mixed by a screw or the like within the cylinder, and is prepared as the resin material R, and the resin material R is injected and filled through the gate 38 into the cavity 22 at a predetermined pressure. Note that the injector 40 is not limited to the above-described structure provided that it can inject and fill the resin material R, which is in a molten state, through the gate 38 into the cavity 22.

### <Producing method for resin molded article>

A method for producing the resin molded article in the present embodiment includes: injecting a resin material containing a foaming agent into a cavity of a mold; and expanding, after filling the cavity with the resin material, a volume of the cavity by moving a movable mold from a fixed mold, which constitute the mold, in a releasing direction.

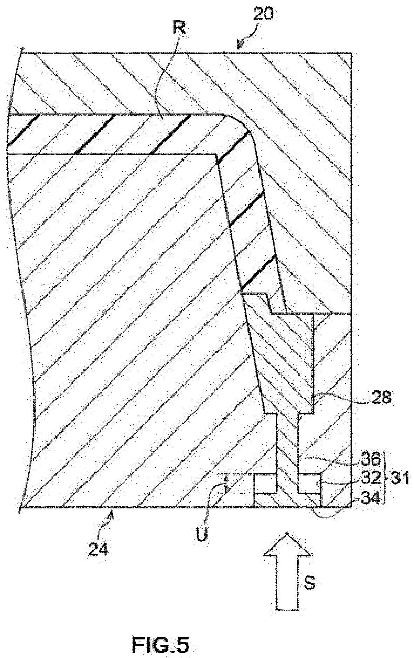

As shown in Fig. 4, the resin material R that contains a foaming agent is injected and filled from the injector 40 through the gate 38 into the cavity 22. In a case in which the resin material R is formed from a thermoplastic resin, the resin material R is heated to make flowable, and then is supplied into the cavity 22. At this time, as illustrated in Fig. 5, a load is applied to the slidable mold 28 in a direction in which the slidable mold 28 moves toward the fixed mold 20 (a direction indicated by an arrow S). The slidable mold 28 therefore does not move in the releasing direction of the movable mold 24 when the resin material R is injected into the cavity 22 and the cavity 22 is filled with the resin material R.

Here, it is preferable to set a temperature of the cylinder to be 250°C or less at the region that is 1/3 to 1/2 of the entire length of the cylinder from the exit of the hopper of the injector 40 of the resin material R. The temperature described above is applied at a region that excludes the exit of the hopper. By setting the temperature of this region of the cylinder to be 250°C or less, the foaming gas escaping from the hopper exit side can be suppressed, and it is easy to achieve effects such as an improvement in foamability, and stability and the like at the time of molding.

The resin material that is used in the present embodiment is not particularly limited. For example, resin materials that are used in injection foam molding generally include a resin and a foaming agent. Examples of the resin that is used in the resin material R include at least one type of resin selected from the group consisting of polyethylenic resins, polypropylenic resins (PP), composite polypropylenic resins (PPC), polystyrenic resins, polyethylene terephthalate resins, polyvinyl alcohol resins, vinyl chloride resins, ionomer resins, polyamidic resins, acrylonitrile butadiene styrene copolymer resins (ABS), and polycarbonatic resins. Thereamong, at least one type of resin selected from the group consisting of polypropylenic resins (PP), composite polypropylenic resins (PPC), and acrylonitrile butadiene styrene copolymer resins (ABS) is preferable.

Further, examples of the foaming agent include organic foaming agents such as azodicarbonamide, inorganic foaming agents such as sodium hydrogen carbonate (other names: sodium bicarbonate, bicarbonate of soda), and the like. Presently, inorganic sodium hydrogen carbonate is mainly used as a foaming agent in the foam molding of automobile interior parts, but, from the viewpoint of improving the coating performance (hot water resistance and the like), organic foaming agents are preferable.

Examples of organic foaming agents include azodicarbonamide (ADCA), N,N-dinitroso pentamethylene tetramine (DPT), 4,4-oxybis benzenesulfonyl hydrazide (OBSH), hydrazodicarbonamide (HDCA) and the like. Azodicarbonamide (ADCA) is preferable.

Further, the mold 26 is usually set to a temperature that is lower than that of the resin material R supplied therein. Therefore, when the resin material R is filled into the cavity 22, a hardening of the resin material R, that is to say, a forming the skin layers 14, starts from the portions that contact the mold.

Note that, before injecting the resin material R into the cavity 22, it is preferable to fill nitrogen gas into the cavity 22 in advance, and it is more preferable to heat the nitrogen gas and fill it into the cavity 22. By heating the nitrogen gas to be filled, a sudden drop in temperature of the cavity 22 interior (the mold) can be suppressed, and the foamability of the resin material R can be stabilized. Further, by heating the nitrogen gas to be filled, the dependence of the foaming force of the resin material R on the outside air temperature can be suppressed without being influenced by the outside air temperature, and the foamability of the resin material R can be stabilized.

A temperature of the nitrogen gas to be filled in the cavity 22 is not limited to a particular temperature as long as the temperature can prevent a rapid temperature drop inside the cavity 22 (the mold 26), and is preferably 30°C to 50°C from the viewpoint of stability of the molding.

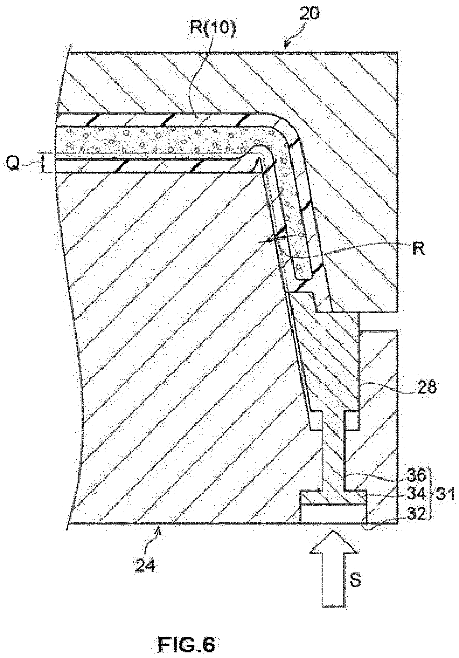

Next, as illustrated in Fig. 6, the movable mold 24 is released against the fixed mold 20 (core-back) by a predetermined amount in the releasing direction (a mold-opening direction), thereby causing the resin material R unsolidified to foam and forming the foamed layer 13. In Fig. 6, a position of the movable mold 24 before the core-back is illustrated by a chain double-dashed line. A movement amount Q of the movable mold 24 against the fixed mold 20 in the core-back (see Fig. 6) is set to be within a slide stroke U of the cylinder portion 32 (see Fig. 5). In the core-back, the load is still applied to the slidable mold 28 in the direction in which the slidable mold 28 moves toward the fixed mold 20 (the direction indicated by the arrow S), and thus the slidable mold 28 does not move during the core-back. Therefore, at the tip portion 15 and the cutout 16 provided at the end of the protruding portion 12 in the protruding direction, the formation of the foamed layer is suppressed. As a result, deformation of the end portion (the tip portion 15 and the cutout 16) of the resin molded article is prevented or reduced.

In addition, as illustrated in Fig. 6, when the core-back is performed on the movable mold 24 against the fixed mold 20 in the releasing direction, an expansion amount of the main body portion 11 is roughly equal to the movement amount Q of the movable mold 24. In contrast, an expansion amount of the protruding portion 12 is roughly equal to a distance R illustrated in Fig. 6. Here, the distance R refers to a distance between a position of the movable mold 24 before the core-back and the position of the movable mold 24 after the core-back in a direction perpendicular to the back face 11E. As illustrated in Fig. 6, the distance R (i.e., the expansion amount of the protruding portion 12) is small compared with the movement amount Q (i.e., the expansion amount of the main body portion 11). As a result, a thickness of the foamed layer 13A in the main body portion 11 is larger than a thickness of the foamed layer 13B in the protruding portion 12. In addition, a difference in expansion amount between the main body portion 11 and the protruding portion 12 causes the formation of the concavity 17 at the root portion 19 of the protruding portion 12 at the opposite face 11B from the surface of the opposite face 11B toward the thickness direction side of the main body portion 11.

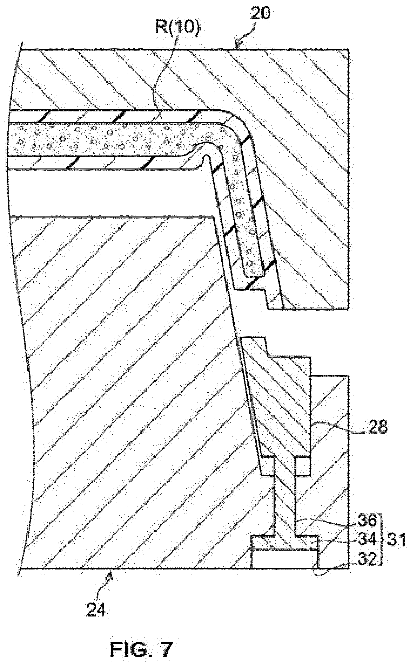

Next, as illustrated in Fig. 7, after the application of the load to the slidable mold 28 by the load applicator, which is not illustrated, is stopped, the movable mold 24 is mold-opened. By detaching the resin molded article 10 from the fixed mold 20, the resin molded article 10 is obtained.

In the resin molded article 10, a thickness A1 of the first foamed layer 13A is preferably larger than a total thickness B1 of the pair of first skin layers 14A by which both faces of the first foamed layer 13A are covered. The thickness A1 of the first foamed layer 13A being larger than the total thickness B1 of the pair of first skin layers 14A has a tendency for the resin molded article 10 to have a higher strength. A ratio (A1/B1) of the thickness A1 of the first foamed layer 13A to the total thickness B1 of the pair of first skin layers 14A is preferably 1.3 to 3.2 and more preferably 1.3 to 2.3.

In the resin molded article 10, a thickness A2 of the second foamed layer 13B is preferably smaller than a total thickness B2 of the pair of second skin layers 14B by which both faces of the second foamed layer 13B are covered. The thickness A2 of the second foamed layer 13B being smaller than the total thickness B2 of the pair of second skin layers 14B has a tendency to further prevent or reduce the deformation of the end portion of the protruding portion 12. A ratio (A2/B2) of the thickness A2 of the second foamed layer 13B to the total thickness B2 of the pair of second skin layers 14B is preferably 0.6 to 0.9.

In the present disclosure, a "thickness of a layer" of the foamed layer, the skin layer and the like is an arithmetic mean value of measurement values obtained by measuring thicknesses at nine points on its cross section under a microscope.

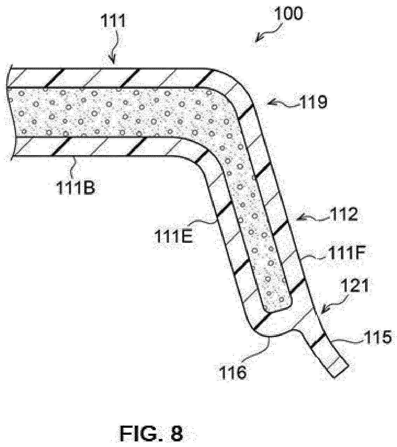

Fig. 8 is a cross-sectional view of a vicinity of a protruding portion 112 of a resin molded article 100 formed by using a movable mold that is not provided with the slidable mold 28 at a portion corresponding to the cutout 16 of the resin molded article 10 in the cavity 22 illustrated in Fig. 4. When the movable mold not provided with the slidable mold 28 is subjected to core-back, a foamed layer is prone to be also formed in a vicinity of a tip portion 115 and a cutout 116, which are provided at an end of the protruding portion 112 in its protruding direction. In addition, a front face 111F of the protruding portion 112 is prone to stick to a cavity face of a mold. In contrast, a back face 111E of the protruding portion 112 is separated from the cavity face of the mold. Therefore, when the foamed layer is formed inside the protruding portion 112, the front face 111F of the protruding portion 112 resists expanding, while the back face 111E of the protruding portion 112 is prone to expand. Therefore, strain is prone to occur between a back face 111E side and a front face 111F side of the protruding portion 112, and the strain is prone to cumulate particularly in a proximity to a root 121 of the tip portion 115. As a result, the tip portion 115 tends to be deformed outwardly from a main body portion 111. In addition, the cutout 116 tends to expand.

In the resin molded article 100 illustrated in Fig. 8, since the deformation is prone to occur at the end portion (the tip portion 115 and the cutout 116), foaming at a root portion 119 of the protruding portion 112 is less prone to be inhibited. As a result, the root portion 119 of the protruding portion 112 is not prone to a concavity from a surface of an opposite face 111B toward a thickness direction side of the main body portion 111.

Note that the present disclosure is not limited to the specific structures of the above-described embodiments, and can be modified in various ways within a scope as defined in the claims.

### Explanation of References

- 10: Resin Molded Article
- 11: Main Body Portion
- 12: Protruding Portion
- 13: Foamed Layer
- 14: Skin Layers
- 15: Tip Portion
- 18: Molding Apparatus
- 20: Fixed Mold
- 22: Cavity
- 24: Movable Mold
- 26: Mold
- 28: Slidable Mold
- 30: Automobile Body
- 31: Controller
- 32: Cylinder Portion
- 34: Piston Portion
- 36: Rod
- 38: Gate
- 40: Injector

## Claims

1. A resin molded article (10) comprising:
a main body portion (11) having a design face (11A) and an opposite face (11B) thereto, and having a first foamed layer (13A) formed inside the main body portion (11) and being covered with a pair of first skin layers (14A), wherein the skin layers (14A) are formed from resin material and have a foaming ratio lower than the foaming ratio of the first foamed layer (13A);
a protruding portion (12) that is provided at an edge portion (11C) of the main body portion (11), and that protrudes in a protruding direction (E) toward a side opposite from the design face (11B) in a thickness direction (T) of the main body portion (11); and
a concavity (17) that is recessed from a surface of the opposite face (11B) toward a thickness direction side of the main body portion (11) at a root portion (19) of the protruding portion (12) at the opposite face (11B) which is opposite to the surface (11F) continuous from the design face, wherein
at an end of the protruding portion (12) in the protruding direction (E), a tip portion (15) is provided along a surface of the protruding portion (12) that continues from the design face (11A) of the main body portion (11),
the protruding portion (12) has a second foamed layer (13B) and a pair of second skin layers (14B) by which both faces of the second foamed layer (13B) are covered,
the protruding direction (E) of the protruding portion (12) is inclined outward from the edge portion (11C) of the main body portion (11) with respect to the thickness direction (T) of the main body portion (11).

2. The resin molded article according to claim 1, wherein:
a thickness A1 of the first foamed layer (13A) is larger than a total thickness B1 of the pair of first skin layers (14A).

3. The resin molded article according to claim 1 or 2, wherein:
a thickness A2 of the second foamed layer (13B) is smaller than a total thickness B2 of the pair of second skin layers (14B) by which both faces of the second foamed layer (13B) are covered.

4. The resin molded article according to any of the preceding claims, wherein, on an opposite side of the tip portion (15) to the surface of the protruding portion (12) that continues from the design face (11A) of the main body portion (11), a cutout (16) is presented.

5. The resin molded article according to claim 3 or 4, wherein at the tip portion (15) and the cutout (16) provided at the end of the protruding portion (12) in the protruding direction (E), the formation of the second foamed layer (13B) is suppressed.

## Patentansprüche

1. Harzformartikel (10), umfassend:
einen Hauptkörperabschnitt (11), der eine Gestaltungsfläche (11A) und eine gegenüberliegende Fläche (11B) aufweist, und der eine erste geschäumte Schicht (13A) aufweist, die innerhalb des Hauptkörperabschnitts (11) gebildet ist und mit einem Paar erster Hautschichten (14A) bedeckt ist, wobei die Hautschichten (14A) aus Harzmaterial gebildet sind und ein geringeres Schaumverhältnis aufweisen als das Schaumverhältnis der ersten geschäumten Schicht (13A);
einen vorstehenden Abschnitt (12), der an einem Randabschnitt (11C) des Hauptkörperabschnitts (11) bereitgestellt ist, und der in einer vorstehenden Richtung (E) zu einer der Gestaltungsfläche (11B) gegenüberliegenden Seite in einer Dickenrichtung (T) des Hauptkörperabschnitts (11) vorsteht; und
eine Konkavität (17), die von einer Oberfläche der gegenüberliegenden Fläche (11B) in Richtung einer Dickenrichtungsseite des Hauptkörperabschnitts (11) an einem Wurzelabschnitt (19) des vorstehenden Abschnitts (12) an der gegenüberliegenden Fläche (11B) zurückgesetzt ist, die der Oberfläche (11F) gegenüberliegt, die sich von der Gestaltungsfläche fortsetzt, wobei
an einem Ende des vorstehenden Abschnitts (12) in der vorstehenden Richtung (E) ein Spitzenabschnitt (15) entlang einer Fläche des vorstehenden Abschnitts (12) bereitgestellt wird, der sich von der Gestaltungsfläche (11A) des Hauptkörperabschnitts (11) fortsetzt,
der vorstehende Abschnitt (12) eine zweite geschäumte Schicht (13B) und ein Paar zweiter Hautschichten (14B) aufweist, durch die beide Flächen der zweiten geschäumten Schicht (13B) abgedeckt sind,
die vorstehende Richtung (E) des vorstehenden Abschnitts (12) von dem Randabschnitt (11C) des Hauptkörperabschnitts (11) in Bezug auf die Dickenrichtung (T) des Hauptkörperabschnitts (11) nach außen geneigt ist.

2. Harzformartikel nach Anspruch 1, wobei:
eine Dicke A1 der ersten geschäumten Schicht (13A) größer ist als eine Gesamtdicke B1 des Paars erster Hautschichten (14A).

3. Harzformartikel nach Anspruch 1 oder 2, wobei:
eine Dicke A2 der zweiten geschäumten Schicht (13B) kleiner ist als die Gesamtdicke B2 des Paares zweiter Hautschichten (14B), die beide Flächen der zweiten geschäumten Schicht (13B) abdecken.

4. Harzformartikel nach einem der vorstehenden Ansprüche, wobei auf der gegenüberliegenden Seite des Spitzenabschnitts (15) zu der Oberfläche des vorstehenden Abschnitts (12), der sich von der Gestaltungsfläche (11A) des Hauptkörperabschnitts (11) fortsetzt, ein Ausschnitt (16) vorgesehen ist.

5. Harzformartikel nach Anspruch 3 oder 4, wobei an dem Spitzenabschnitt (15) und dem Ausschnitt (16), die an dem Ende des vorstehenden Abschnitts (12) in der vorstehenden Richtung (E) bereitgestellt werden, die Bildung der zweiten geschäumten Schicht (13B) unterdrückt wird.

## Revendications

1. Article (10) moulé en résine comprenant :
une partie corps principal (11) présentant une face de conception (11A) et une face opposée (11B) qui est opposée à celle-ci, et présentant une première couche (13A) de mousse formée à l'intérieur de la partie corps principal (11) et recouverte d'une paire de premières couches (14A) de peau, dans lequel les couches (14A) de peau sont formées à partir d'un matériau en résine et présentent un taux de moussage inférieur au taux de moussage de la première couche (13A) de mousse ;
une partie saillante (12) qui est prévue au niveau d'une partie (11C) de bord de la partie corps principal (11) et qui fait saillie dans une direction de saillie (E) vers un côté opposé à la face (11B) de conception dans une direction d'épaisseur (T) de la partie corps principal (11) ; et
une concavité (17) qui est en retrait par rapport à une surface de la face opposée (11B) vers un côté de direction d'épaisseur de la partie corps principal (11) au niveau d'une partie racine (19) de la partie saillante (12) au niveau de la face opposée (11B) qui est opposée à la surface (11F) continue à partir de la face de conception, dans lequel
à une extrémité de la partie saillante (12) dans la direction de saillie (E), une partie pointe (15) est prévue le long d'une surface de la partie saillante (12) qui se poursuit à partir de la face de conception (11A) de la partie corps principal (11),
la partie saillante (12) présente une deuxième couche (13B) de mousse et une paire de deuxièmes couches (14B) de peau par laquelle les deux faces de la deuxième couche (13B) de mousse sont recouvertes,
la direction de saillie (E) de la partie saillante (12) est inclinée vers l'extérieur à partir de la partie (11C) de bord de la partie corps principal (11) par rapport à la direction (T) d'épaisseur de la partie corps principal (11).

2. Article moulé en résine selon la revendication 1, dans lequel :
une épaisseur A1 de la première couche (13A) de mousse est supérieure à une épaisseur totale B1 de la paire de premières couches (14A) de peau.

3. Article moulé en résine selon la revendication 1 ou la revendication 2, dans lequel :
une épaisseur A2 de la deuxième couche (13B) de mousse est inférieure à une épaisseur totale B2 de la paire de deuxièmes couches (14B) de peau par laquelle les deux faces de la deuxième couche (13B) de mousse sont recouvertes.

4. Article moulé en résine selon l'une quelconque des revendications précédentes, dans lequel, sur un côté de la partie pointe (15) opposé à la surface de la partie saillante (12) qui se poursuit à partir de la face de conception (11A) de la partie corps principal (11), une découpe (16) est présentée.

5. Article moulé en résine selon la revendication 3 ou la revendication 4, dans lequel au niveau de la partie pointe (15) et de la découpe (16) réalisée au niveau de l'extrémité de la partie saillante (12) dans la direction de saillie (E), la formation de la deuxième couche (13B) de mousse est supprimée.
